# EUROPEAN PATENT APPLICATION

(11) **EP 4 394 488 A1**
(43) Date of publication of application: **03.07.2024**
(21) Application number: 22217222.3
(22) Date of filing: 29.12.2022
(51) Int. Cl.: G02B 30/50, G02F 2/02

(54) **DISPLAY AND DISPLAY ARRANGEMENT COMPRISING AN UPCONVERSION MATERIAL IN CONJUNCTION WITH A PHOTOCHROMIC AND/OR PHOTOELECTROCHROMIC MATERIAL**

(71) Applicant: Freshape SA, 1690 Villaz-St-Pierre (CH)
(72) Inventor: LIU, Yuhang, 1030 Bussigny (CH); KUNG, Yen-Cheng, 1110 Morges (CH)
(74) Representative: Schneiter, Sorin

(57) **Abstract**

The present invention concerns a display arrangement comprising a display medium and two or more light assemblies. The display medium comprises one or more upconversion material and one or more photochromic and/or photoelectrochromic material. The light assemblies are configured to emit photons that excite the upconversion material to emit a higher photon suitable to activate the photochromic and/or photoelectrochromic material, thereby enabling the representation of an image by the display medium.

## Description

### Technical Field

The present invention relates to displays and display arrangements. The invention more particularly relates to reflective displays, light driven displays, full-color displays and/or displays passed on electrochromic materials and/or photoelectrochromic materials.

### Background Art and Problems Solved by the Invention

Currently commercialized displays are to a major extent light emitting displays. Today, the market is dominated by LCDs (liquid crystal displays) and OLED (organic light emitting diode) displays.

Over a wide area of different devices, including mobile phones, computer screens, TV screens, display panels, and even larger screens, currently commercialized displays are to a major extent of the light emitting type. As these displays emit light, they are tiring to the human eye and have further disadvantages, such as high energy consumption, narrow viewing angle, and are not adapted to the varying environmental light, for example in outdoor conditions. Another disadvantage of light emitting displays is that there generally exists difficulties to realize three-dimensional displays.

It is an objective of the invention to provide a reflective display, in which the image is not produced by light emission, such as light-emitting pixels, but by the reflection of environmental light on or in the screen. Watching a reflective display corresponds more to watching a printed medium than using a luminosity-based screen. Reflective screens do not exhibit the disadvantages mentioned above and may thus be considered particularly advantageous for outdoor screens (higher contrast under direct solar irradiation) and for screen-based reading (less tiring to the human eye). Reflective displays may also be called passive displays. E-ink displays are known as one of them.

The use of photochromic or photoelectrochromic materials (herein after: chromic materials) has also been suggested for use in displays including reflective displays. Such materials have the property of changing color when exposed to the appropriate light, and can thus be used in light driven displays. A light source is generally provided inside the display or externally, and is used for irradiating the display comprising the chromic material so as to produce the desired coloration at the irradiated place in the display.

US 7,410,750 B2 discloses a multicolored screen comprising a substrate having a coating of marking particles comprising a mixture of two photochromic materials, the two materials being a spiropyran material and a single dithienylethene. Although a screen is mentioned, this document refers to images, and does not refer to full-colour possibilities. Furthermore, this document is silent with respect to the driving of a display.

JP 2004 258474 A discloses a photochromic screen which uses light emitted from an electrochemiluminescence-based light emitting layer provided between substrates comprising electrodes, this light being driven by an active matrix provided so as to produce the appropriate color change in the photochromic layer. Due to the complexity of the architecture, including the active matrix and the electrochemiluminescent layer, the fabrication process of this device is complex.

US 6,327,074 discloses a three-dimensional color image display. The display comprises a transparent display medium in which particles that can emit light of a suitable color upon excitation by a laser light source. In this device, the light source is opposed to the viewing side of the display, and a filter is used on the display to protect the viewer from light produced by the laser. As the particles emit light, this is not a reflective display. Furthermore, it would be advantageous to be able to have more options for providing the driving light source, and not only opposed to the viewing side, which requires space and therefore is not suitable for most display applications such as TVs, mobile phones, for example.

US 5,764,403 discloses the use of two infrared light sources in order to illuminate fluorescent, visible light emitting materials provided in a transparent host material of the display. The fluorescent materials are active ions or molecules, such as erbium, praseodymium and thulium ions (Er³⁺, Pr³⁺, and Tm³⁺) used to obtain green, red and blue colors, respectively. This display is, however, not a passive/reflective display. Furthermore, in order o obtain different colors it is generally necessary to use different layers, each layer comprising a different active ion.

Further technologies are disclosed in US 2020/0251538 A1, US 6,402,037, US 2010/0085471 A1, WO 2012/098511, and US 6,402,037 B1, without addressing the objectives underlying the present invention.

### Summary of the Invention

In an aspect, the present invention provides a display medium comprising one or more upconversion material that is suitable to convert absorbed light to emitted lower wavelength and, one or more photochromic and/or photoelectrochromic material, capable of being colored and/or changing color upon absorption of light.

In an aspect, the present invention provides a display arrangement comprising two or more light assemblies and the display medium of the invention.

In a preferred embodiment, the display of the present invention is a passive and/or reflective display.

In an embodiment, the display is a photochromic and/or photoelectrochromic display.

In an embodiment, the display is a flat display (2D display) or a three-dimensional (3D), volume display.

Remarkably, the invention comprises combining and exploiting the properties of upconversion materials with that of chromic materials to provide a display that can be driven by light, preferably by low energy light and in particular by infrared (IR) light. Without wishing to be bound by theory, the color of the chromic material can be generated by the light emitted by the upconversion material. The upconversion material, in turn, emits like upon excitation from two or more sources of low energy light, such as NIR light. Two photons or light beams stemming from different light sources of comparatively low energy light may then be used to sufficiently excite the upconversion material so as to cause it to emit a photon or light beam of comparatively higher energy light, which has sufficient energy to induce the color change in the chromic material.

Further aspects and preferred embodiments of the invention are defined herein below and in the appended claims. Further features and advantages of the invention will become apparent to the skilled person from the description of the preferred embodiments given below.

### Brief Description of the Drawings

**Figure 1** schematically illustrates a display arrangement according to an embodiment of the invention.
**Figures 2** schematically illustrates a display arrangement according to a second embodiment of the invention, comprising a three-dimensional display.
**Figure 3A** and **3B** schematically illustrate embodiments of associating upconversion and chromic materials in see-island and core-shell configurations, respectfully.
**Figures 4A** and **4B** schematically illustrate core-shell associated upconversion and chromic materials in a full color display medium in accordance with an embodiment.
**Figure 5A** and **5B** schematically illustrate further examples of associating upconversion and chromic materials in see-island and core-shell configurations, respectfully, in particular in a full-color display according to an embodiment.

Hereinafter, preferred embodiments of the device of the invention are described, in order to illustrate the invention, without any intention to limit the scope of the present invention.

### Detailed Description of the Preferred Embodiments

The present invention relates to a display comprising one or more upconversion material and one or more photochromic and/or photoelectrochromic material.

"Photochromic materials" are materials that can change color upon excitation by photons. For the purpose of the present specification, a "color change" includes a change from transparent to a non-transparent state and vice versa. Furthermore, black and white is also considered to be colors, such that a change from transparent to black or any other color is also considered as a "change of color".

"Photoelectrochromic materials" generally refer to a family of materials that is bifunctional: they can firstly absorb light and generate photoelectrons. The as generated electrons can subsequently drive the color change on the chromatic part of the photoactive material. In principle, the electron that induces the color change may stem from an external source. In some cases, two or more compounds with different structures or different materials provide together a photoelectrochromic material. Depending on the viewpoint, "photoelectrochromic materials" may be considered as either a particular case of photochromic materials or as an own group of materials.

In the present specification, the term "chromic" is used for one or both selected from "photochromic" and "photoelectrochromic".

Chromic materials as defined herein generally need high energy photons to change color, in particular photons with wavelengths of 600 nm or lower. There generally exists selectivity for the photochromic material to the excitation photons. For instance, if a particular chromic material is excited by 500 nm photon, it is are generally less sensitive to that of 400 nm and 600 nm.

For the purpose of the present specification, the chromic material is "activated" when it is exposed to radiation that induces the change of the color of the chromic material compared to the color of a base state, where said chromic material has a color or is transparent and has not been exposed to activating radiation. The activated status generally has a higher energy level than the non-activated status of the material.

"Upconversion materials" are materials which show the phenomenon of high energy photon emission upon stimulation with comparatively lower energy photons. Upconversion materials are generally selected from non-linear optical materials.

The upconversion material emits light upon exciting light. For the purpose of the present specification, the term "excited" is used in the context of light that is suitable to stimulate the emission of said higher energy light by said upconversion material.

Using an upconversion material makes it possible to excite or activate a sensitizer (for example said chromic material) that formally requires a higher energy photon, by exposing the upconversion material to two or more lower energy photons.

"Lower" and "higher", in particular when referring to the energy of light or photons and/or to the wavelength of light, are mainly intended to concern the relation between the absorbed and emitted photons of the upconversion material and the photons used to activate the chromic material. It thus also refers to the energy of the driving light beams 26, 27 (see below) taken individually compared to the light emitted by the upconversion material. In particular, the energy of each one of the two or more photons (the driving light beams) suitable to excite, together, the upconversion material is "lower" than the energy of the photon emitted by the excited upconversion material and suitable to activate the chromic material.

It is noted that the wording "lower wavelength light" is equivalent to "higher energy light", and these expressions may be used interchangeably in this specification.

Generally, the upconversion and chromic materials are selected in such a manner that the energy of the light emitted by the upconversion material is sufficient for activating the chromic material. In accordance with a preferred embodiment, said one or more chromic material is provided to change color upon absorption of light emitted by said one or more upconversion material.

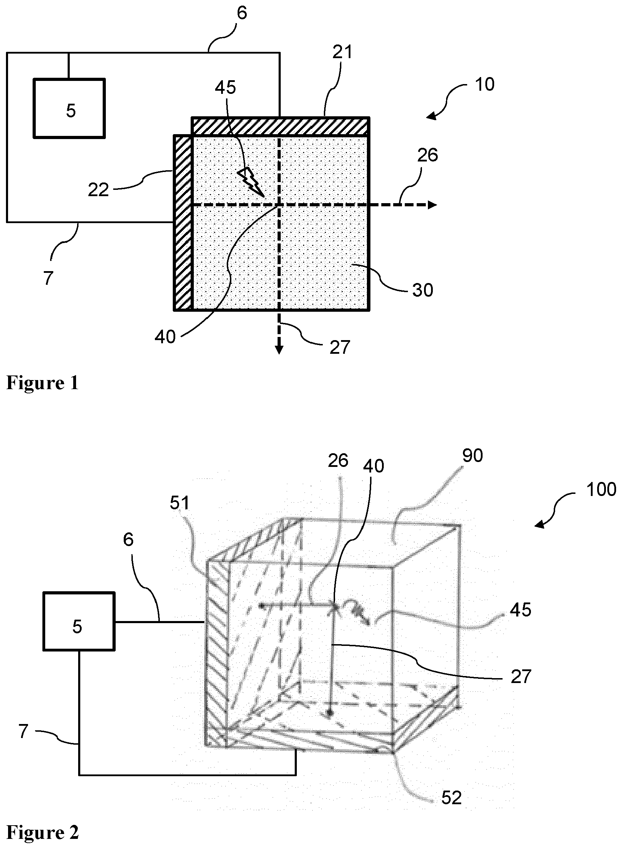

**Figure 1** shows an embodiment of a display arrangement 10 in accordance with the invention. This embodiment concerns a flat panel display, also referred to as a two-dimensional (2D) display, generally meaning that the displayed content extends over a surface or is displayed on a surface. Such displays are generally flat but bent and/or curved screens are also considered as 2D displays for the purpose of the present invention. Even though the viewing surface may be said to extend in three dimensions in case of a curved display, the displayed content remains on the surface of the viewing surface and such displays cannot directly reproduce a 3D object. This does not exclude the possibility of 3D viewing technology, for example in stereoscopic displays or other displays using stereopsis for conveying depth to the viewer. Stereoscopic displays are considered as 2D displays for the purpose of the present invention.

A 2D display generally comprises one (curved or flat) or two opposed (generally flat) viewing surfaces. An embodiment of a three-dimensional (3D) display, in which the content is displayed within a volume extending over three dimensions of space is described further below with reference to Figure 2.

For the purpose of the present specification "content", in the context of "displayed content" and the like, refers to what is shown on or by the display and encompasses any displayable content, including written information, such as text, numbers, symbols, information and graphical representations, such as images and the like. The content is displayed by reflected visible light.

The display arrangement 10 comprises a display medium 30 which is generally the display itself, in particular the part comprising the viewing area or volume, as the case may be. Furthermore, the display arrangement comprises two or more light assemblies 21 and 22. There are preferably at least two light assemblies, but there may be more, for example 3, 4, 5 or more light assemblies. Each light assembly may comprise a plurality of separate and/or independently addressable light sources. The light emitted by the light sources is also referred to herein as the driving light.

The display arrangement further comprises a driver unit 5, which controls the light assemblies 21, 22. The driver unit 5 preferably comprises a data processing entity, for example a microcontroller or a computer, including a CPU and memory, and preferably software and/or firmware as required for driving the light sources and/or the optics of the light assemblies. The driver unit is connected with the light assemblies by communication channels 6, 7, which may be selected from cable connections and wireless connections.

The display medium 30 comprises the one or more upconversion material and the one or more chromic material.

In an embodiment, said display medium 30 comprises a host material that is transparent to the driving light, preferably NIR light and preferably to visible light, wherein said upconversion material and said photochromic and/or photoelectrochromic material are provided in said host material. The host material preferably forms a matrix is suitable to contain and preferably immobilize said upconversion and chromic materials.

The host material is preferably a transparent matrix material, in particular transparent to the driving light and further preferably also transparent to visible light. Host materials may be selected from any one or more materials having the required transparency requirement and being at the same time suitable to accommodate said upconversion and chromic materials. In an embodiment, host materials are selected from plastics, resins and glasses. Exemplary host materials may be selected from polymethylacrylate (pmma), epoxy, aerogel, and glass. Further exemplary host materials, in particular glasses, may be selected from calcium fluoride, fused silica, halide glasses, sodium chloride, potassium chloride, potassium bromide, and chalcogenide glasses. Further materials included are those mentioned in US 5,764,403, col. 4, lines 27-44, are incorporated herein by reference.

The chromic and/or upconversion material are preferably distributed in the host material, for example distributed evenly over the viewing area (or volume) of the display medium.

In a preferred embodiment, said one or more upconversion material are selected from materials comprising, consisting essentially of or consisting of one or more selected from the group consisting of Si, SiO₂, TiO₂, Al₂O₃, ZrO₂, HfO₂, SnO₂, Fe₂O₃, ZnO, WO₃, Nb₂O₅, In₂O₃, Bi₂O₃, Y₂O₃, Pr₂O₃, CeO₂ and other rare earth metal oxides, CdS, ZnS, PbS, Bi₂S₃, CdSe, CdTe, MgTiO₃, SrTiO₃, BaTiO₃, Al₂TiO₅, Bi₄Ti₃O₁₂ and other titanates, CaSnO₃, SrSnO₃, BaSnO₃, Bi₂Sn₃O₉, Zn₂SnO₄, ZnSnO₃ and other stannates, CaZrO₃, SrZrO₃, BaZrO₃, Bi₄Zr₃O₁₂ and other zirconates, combinations of two or more of the aforementioned and other multi-element oxides containing at least two of alkaline metal, alkaline earth metal elements, Al, Ga, In, Si, Ge, Sn, Pb, Sb, Bi, Sc, Y, La or any other lanthanide, Ti, Zr, Hf, Nb, Ta, Mo, W, Ni or Cu.

In a still more preferred embodiment, the said one or more upconversion material are selected from transition metal ions including lanthanide ions. In a preferred embodiment, said one or more upconversion material comprises a material that is independently selected from one or more of the group consisting of Pr³⁺ (4f2), N^{d3}+ (4f3), Sm³⁺ (4f5), Eu³⁺ (4f6), Gd³⁺ (4f7), Tb³⁺ (4f8), Dy³⁺ (4f9), Ho³⁺ (4f10), Er³⁺ (4f11), Tm³⁺ (4f12), Tm²⁺ (4f13), actinides ions, for example, U⁴⁺ (5f2), U³⁺ (5f5), and transition metal ions, such as Ti²⁺ (3d2), Cr³⁺ (3d3), Mn²⁺ (3d5), Ni²⁺ (3d8), Cu²⁺ (3d9), Mo³⁺ (4d3), Re⁴⁺ (5d3), Os⁴⁺ (5d4).

The above ions may be present in the form of salts and/or their corresponding oxides.

The one or more upconversion material is preferably provided in the form of particles, preferably nano- and/or microparticles, most preferably nanoparticles, and/or more generally in the form of a layer having an increased surface, such as a mesoscopic and/or nanoporous 3D scaffold or sintered particles. Nanoparticles are defined herein as particles having an average size of less than 1µ, while microparticles may have an average size of ≥1 and up to 1mm. Particles may have any form, and may be selected from particulate tubes, pillars, sheets, spheres, and the like.

In a preferred embodiment, the one or more upconversion material is selected from materials that can be excited by two or more photons of low energy light, such as lower energy visible light, IR light, and preferably NIR light. There is not a clearcut wavelength that separates lower energy visible light from NIR light. Depending on the definition of lower energy visible light, the invention encompasses that the upconversion material be excitable with two photons, one or both of which may be part of lower energy visible light. Lower energy visible light may be considered to be visible light having a wavelength of 650 to 750 nm. Depending on the definition of NIR light elsewhere in this specification, lower energy visible light may include light having a wavelength of up to 790 nm or even up to 800 nm.

Chromic materials may be independently selected from organic, inorganic and hybrid materials having the desired chromic properties.

In an embodiment, said one or more chromic materials are selected from organic materials, such as organic compounds or polymers, from metal oxides, in particular transition metal oxides, and from organometallic compounds. Preferably, the chromic material is an organic compound. The organic material is preferably selected from small molecules and polymers, and salts of such organic materials. The small molecule, or the monomeric moieties of the polymer, may have from 5-150 carbons and 0-60 heteroatoms, where heteroatoms may be selected from B, Si, As, O, S, Se, Te, N, P, and halogen, for example. Preferably, said small molecule or monomer moiety has 6-100 carbons and 1-50 heteroatoms, most preferably 7-50 carbons and 1-30 heteroatoms.

In an embodiment, the chromic materials comprise an anchoring group and are adsorbed on the support material via an anchoring group. Suitable anchoring groups may be selected independently, from any other anchoring group, from -COOH, -PO₃H₂, -PO₄H₂, -P(R¹)O₂H (phosphinic acid); -SO₃H₂, -SO₄H₂, -CONHOH⁻, 1,2 hydroxy benzene, 1-hydroxy-2-carboxy benzene, acetylacetonate, deprotonated forms of the aforementioned, organic and/or inorganic salts of said deprotonated forms, and chelating groups with π-conducting character. R¹ may be an organic substituent comprising from 1 to 50 carbons and 0-25 heteroatoms, said hydrocarbon being covalently bound to the P atom of said phosphinic acid group by a carbon atom.

In a preferred embodiment, the chromic material is selected from (i) 1-ethyl-1'-(2-phosphonoethyl)-[4,4'-bipyridine]-1, 1'-diium, (ii) 1-phenyl-1'-(4-(2-phosphonoethyl)phenyl)-[4,4'-bipyridine]-1,1'-diium, and (iii) 1-ethyl-4-(4-(1-(2-phosphonoethyl)pyridin-1-ium-4-yl)phenyl)pyridin-1-ium. The cationic compounds may be present in the form of a salt, for example halide salt, in particular bromide salt.

Independently from its chemical nature and composition, the one or more chromic materials may also be provided in the form of particles, as distributed molecules and/or polymers, for example.

In a preferred embodiment, the chromic material has at least a first state, which is either transparent or white, and a second state, which is colored or dark. Preferably, the second state is the activated state.

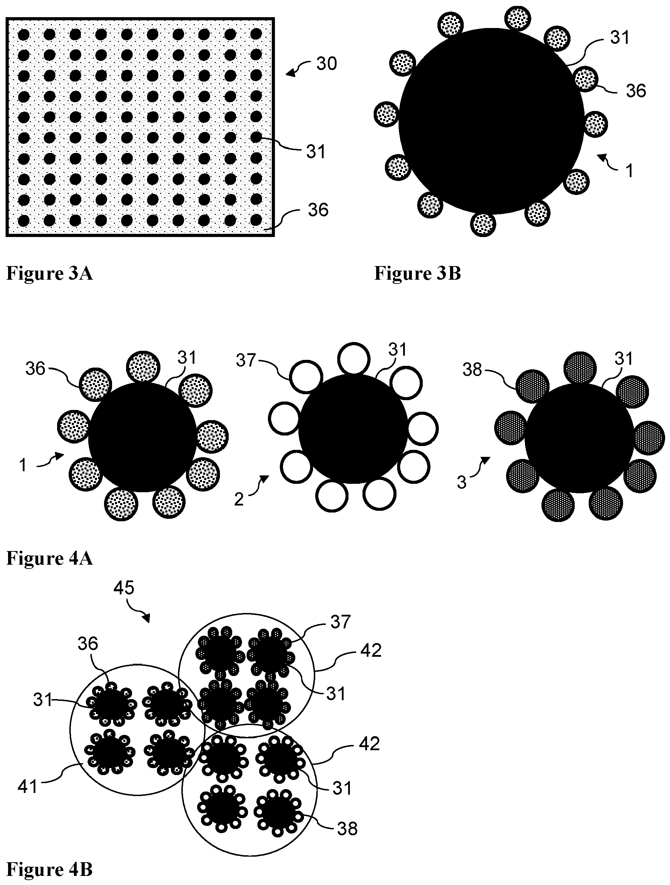

The upconversion and chromic materials are preferably associated with each other in such a way so as to efficiently enable activation of the chromic material by radiation emitted by said upconversion material. Examples of suitable associations, such as the sea-island and core-shell configurations are discussed further below with respect to Figs. 3A-5B.

The light sources which will be described in more detail further below.

In accordance with an embodiment, the display arrangement comprises two or more light assemblies 21, 22. The light assemblies preferably comprises sources of light, preferably low energy visible light and/or invisible light, and most preferably near infrared light (NIR). For the purpose of the present specification, NIR light is defined as light having a wavelength that is the range of 750-2500 nm, preferably 790-2500 nm, and most preferably 800-2000 nm. As noted above, depending on the viewpoint, some of these may be considered to overlap with low energy visible light. It is noted that the two or more light assemblies may be configured to emit light having the same or different energy, including light beams of two NIR light with different energies, two lower energy visible light beams or one NIR and one lower energy visible light beam, for example.

Each light assembly comprises one or more light sources and, optionally, optics such as lenses, mirrors, filters and the like so as to generate a light beam having the desired parameters. If the light assembly comprises a plurality of light sources, the light assembly is preferably configured to address each light source independently.

In the embodiment shown in Fig. 1, the two light assemblies 21 and 22 are preferably suitable to generate light beams and to direct the light beams into the display medium 30.

In a preferred embodiment, said two or more light assemblies 21, 22 are configured to, independently one from the other, emit light beams into said display medium, for example NIR light beams.

In a preferred embodiment, the display arrangement comprises first and second light assemblies 21, 22, wherein said first and second light assemblies are provided at first and second positions in said arrangement and are configured to emit first and second light beams 26, 27 from said first and second positions into the said display medium 30 such that said first and second light beams intersect at an intersection 40 in said display medium.

Preferably, the light assemblies are adjustable with respect to one or more parameters selected from the group of (1) the direction of a light beam, (2) the position of the light beam, (3) the intensity of the light, (4) the wavelength, (5) the exposing time or duration of illumination. Regarding the wavelength of the light, the light is preferably in the NIR range. Preferably, each light assembly 21, 22 is suitable to produce two or more and more preferably three or more different and/or separate wavelengths of NIR light.

For the purpose of the present specification, the expression "the position of the light beam" is intended to mean the position where the light beam enters the display medium.

Preferably, the two or more light assemblies are independently able to adjust the above parameters of the emitted light. Preferably, the driver unit 5 controls and/or adjusts the above parameters, depending on the information to be displayed by the display medium 30.

As shown in Figure 1, the driver unit causes the light assemblies 21, 22 to emit driving light beams 26, 27, respectively, that intersect at intersection 40.

In a preferred embodiment, at said intersection 40 of said first and second light beams 26, 27, said one or more upconversion material is suitable to convert said light into said lower wavelength and/or higher energy light.

Together, the two driving light beams from the two light assemblies provide sufficient energy to excite the upconversion material that is located at the intersection. Reference numeral 45 indicates that the upconversion material at intersection 40 has been excited to emit a higher energy photon, which higher energy photon is suitable the activate the chromic material in the direct proximity of the upconversion material.

Intersection 40 covers an area or volume of a defined and/or limited dimension where upconversion material and associated chromic materials are present and which are activated by the light beams. For the purpose of the present specification, such a defined area or volume is referred to herein as a pixel (or voxel) of the display medium. The pixel is generally defined by the dimension of the light beams at an intersection, and by the materials provided at the intersection. If the chromic and upconversion materials are evenly distributed in the medium, the position of a pixel in the display medium is not necessarily predefined, but corresponds to the position of the intersection 40 of the driving light beams.

Fig. 1 thus illustrates how the light assemblies may be used to determine the coloration at one pixel, namely by directing two independent beams of driving light to the pixel at intersection 40 and thereby inducing the change of color of the chromic material at this position.

The light assemblies are preferably suitable, together, to address any pixel of the display medium 30. An information display over the entire display viewing area is preferably generated by addressing all pixels by the writing light as required to generate an image. The pixels may be addressed sequentially and/or simultaneously by intersecting light beams generated by the light assemblies. It is noted that besides the position of the intersecting light beams, the intensity, duration and or wavelength of the intersecting light beams may be adjusted so as to generate the desired result at a given pixel. These parameters may be used to determine pixel characteristics such as the color, intensity, contrast, clarity, and the like, at a given pixel.

There are different possibilities to do so, all of which are encompassed by the present invention. In an embodiment, each light assembly comprises an array of separate and independently addressable unit light sources, such that the position of the light beam and its orientation is determined simply by switching on and/or off a particular unit light source of an array.

In another embodiment, one or more light sources, or optics that function together with the light sources, may be provided movably within the light assembly, for example along a guiding rail. In this case, the driver unit moves the light source and/or the optics thereof so as to control the position and/or the direction of the light beam. In this case, each light assembly may comprise only one single light producing unit, but due to the movable arrangement of the light source itself or at least part of the optics used to direct the light beam produced by the light source, the light beam may be directed to any pixel of the display medium.

In yet another embodiment, the light assembly comprises a source of light and/or optics that are provided adjustable to change the orientation and/or position of the light beam so as to direct the light beam to any particular spot in the display medium. For example, the source of light and/or the optics may be provided rotatable, in order to be able to control the direction of the light beam. In other embodiments, different forms of movements may be combined to achieve a desired targeting of the light to a spot in the display medium.

In some embodiments, the light assembly includes motors as necessary to control the direction and/or position of the light beam produced by the one or more light source of a light assembly.

In an embodiment, each of the two light assemblies 21, 22, are provided laterally with respect to the display medium 30, preferably in vicinity and/or in contact with side or top/bottom borders of the display medium.

In the embodiment shown in Fig. 1, the light assemblies 21, 22 extend horizontally and vertically, respectively, substantially in parallel to a respective border of the display medium. Each of the two or more light assemblies may be provided at one of the borders, preferably adjacent borders. In an embodiment, the two light assemblies are preferably provided perpendicularly one with respect to the other.

In the embodiment shown, the first light assembly 21 emits light 26 extending in a vertical direction and the second light assembly 22 emits light 27 extending in a horizontal direction within the display medium.

In this and other embodiments, the direction of the light beam produced by the light assembly remains the same, such as either vertical or horizontal, but the horizontal and vertical position of light emission is adjustable. By determining the vertical position of the horizontal light 27 beam and the horizontal position of the vertical light beam 26 with respect to the display medium, a given pixel may be addressed at any position within the display medium.

Preferably, the display medium 30 has a rectangular and/or quadratic outline as conventional for currently available displays. Light sources 21, 22 may be provided to extend along two lateral borders among the four borders of a rectangular display medium, for example the right and top borders, as shown.

In another embodiment, not illustrated specifically, the light assemblies may be provided at the proximity of one of the borders of the display medium. For example, both light assemblies may be provided at the top or bottom side or on a left or right side.

In the embodiment shown, the light assemblies are in contact with the display medium. In other embodiments, the light sources are not connected to the display medium but are at a distance separated from the display medium.

In a preferred embodiment, the display arrangement comprises a three-dimensional (3D) display medium, for example a cubic display medium.

**Figure** 2 shows an embodiment of a display arrangement 100 comprising a 3D or volume display. The arrangement comprises a display medium 90, which in this case defines a 3D display volume instead of only a display surface. One characteristic and/or advantage of a 3D display is that objects may be displayed naturally in 3D, or at least partially, depending on the extension of the three dimensions. In a 3D display, the view changes in dependence of the position of a viewer with respect to the display. For example, in a 3D display displaying different objects, a smaller object may be hidden to the viewer by a larger object shown in the display, but the smaller object may become visible if the viewer moves around the display, thus conducting a relative displacement with respect to the 3D display.

The indications above with respect to the components of the display medium 30, such as the host, upconversion and chromic materials, also apply to the display medium 90 of the 3D display.

In the embodiment shown, the display medium 90 has the form of a cube, but the display medium of the 3D display of the invention may have any other 3D shape, such as a sphere, a cylinder, a cuboid, or an irregular 3D shape just to mention some exemplary forms.

The display arrangement 100 comprises at least two light arrangements 51, 52, which are provided laterally and preferably externally to the display medium 90. Each light arrangement comprises one or more light sources suitable to direct a light beam into the display medium. Preferably, the two or more light assemblies 51, 52 are each one provided to be able to address any voxel within the medium.

As described above with respect to the 2D display shown in Fig. 2, the light assemblies may be provided in any suitable way, for example in the form of an array of light sources, such that the position of the light beam is controlled by switching on a particular light source of a light assembly. Other possibilities include displaceable light sources, displaceable optics, and/or the change of the orientation of light sources, their optics and/or part of the optics.

In particular, the invention is not limited with respect to the way the direction and/or position of a light beam generated by a light assembly is adjusted.

For any given content to be displayed, some voxels may not be addressed at all, while others need to be addressed by generating intersecting light beams. An overall 3D information display is generated by sequentially and/or simultaneously addressing voxels as required. It is noted that besides the position and/or orientation of the intersecting light beams, the intensity, duration and/or wavelength of the light beams may be adjusted so as to generate the desired result at a given voxel. These parameters may be used to determine characteristics such as the color, intensity, contrast, clarity, and the like, at a given voxel (or pixel).

**Figure 3A** illustrates the upconversion material 36 and the chromic material 31 associated in a sea-island configuration in the display medium 30, 90. In accordance with this embodiment, the materials are evenly and/or randomly distributed in the host material defining the shape of the display medium. Such a configuration may be obtained by dispersing the upconversion and chromic materials in the host material followed by hardening the host material, for example by polymerisation and/or solvent evaporation.

**Figure 3B** illustrates the upconversion material 36 and the chromic material 31 associated in a core-shell configuration. In this embodiment, the chromic material is deposited onto and/or adsorbed on the outer surface of the upconversion material. It is noted that the chromic material may be provided in the form of compounds comprising an anchoring group, which allows absorbing the compound at the surface of the upconversion particle.

In both embodiments shown in Figs 3A and 3B, the upconversion material 31 may be provided in the form of a particle, in particular a nanoparticle, and the chromic material 36 may be an organic compound or polymer deposited and/or absorbed on the particles.

The embodiments shown in Figs 3B and 4A suggest that an individual upconversion component, such as a particle, may be more voluminous than an individual chromic material component, which may be an organic material. The one or more chromic materials may also be provided in the form of a particle coated or adsorbed on the upconversion material. Figs 3A and 4A are schematic representations, and the invention encompasses an individual chromic material component to be more voluminous than the individual upconversion component with which it is associated. Still in another embodiment, the individual chromic material and upconversion components may have similar or identical average sizes.

In an embodiment, a concentration of said chromic material 36 in said display medium 30, 90, is higher than the concentration of said upconversion material in said display medium.

Preferably, any entity of upconversion material, such as a nanoparticle, is surrounded by a plurality of entities of the chromic material. By selecting appropriate concentrations, the probability that the photon emitted by the upconversion material is captured by the chromic material can be adjusted as desired.

In an embodiment, the display of the invention is a multi-color, preferably full color display.

The full-color functionality can be achieved in any suitable way. In an embodiment, two, three, four or more different chromic materials are present, providing a corresponding number of different colors. The different chromic materials may be selected so as to provide additive or subtractive color mixing, for example.

In one embodiment, different chromic materials are distributed at particular positions in the display medium thereby forming limited areas that may be considered as subpixels. In order to generate a color, each subpixel may be separately addressed by intersecting light beams, thereby generating the color at each subpixel required to obtain the overall color of the pixel. In this embodiment, one single upconversion material may be used for activating any one of the different chromic materials.

**Figures 4A** and **4B** illustrate the above embodiment at the example of a core-shell association between the upconversion material 31 and different chromic materials 36-38. As shown in Fig. 4A, particles 31 of a suitable upconversion material are coated with any one of three different chromic materials 36, 37, 38. In Figure 4B, particles comprising the same chromic material 36, 37 or 38 are grouped together in distinct areas 41, 42 and 43, respectively, the areas forming subpixels 41-43 in the display medium. Together, three subpixels 41-43 form a pixel 45, that may assume a color by additive color mixing, for example RGB color mixing. It is noted that the light beams 26, 27 are preferably sufficiently precisely emitted by the light assemblies 21, 22 to address only one subpixel by intersecting precisely at any one of the three areas 41-43 separately, thereby generating the local color at each subpixel. Different sub-pixels may be addressed sequentially and/or simultaneously.

In an embodiment, the display medium comprises a plurality of different upconversion materials, capable of converting a plurality of low energy light having different wavelengths and/or to emit a plurality of lower wavelength and/or higher energy light having different wavelengths. In some embodiments, different upconversion materials and different chromic materials, are used, wherein generally a particular upconversion material is associated with one of the different chromic materials. The different upconversion materials are selected so as to be excitable by different wavelength light beams, requiring preferably different energy light for being excited.

In an embodiment, said upconversion material 31 is a first upconversion material 31 and said one or more chromic material 36 is a first chromic material, wherein said first chromic material passes from transparent to a first color or changes color to said first color when absorbing radiation emitted by said first upconversion material.

In an embodiment, said display medium comprises a second upconversion material 32 and a second chromic material 37, wherein said second chromic material passes from transparent to a second color or changes color to said second color when absorbing radiation emitted by said second upconversion material.

In an embodiment, said display medium comprises a third upconversion material 33 and a third chromic material 38, wherein said third chromic material passes from transparent to a third color or changes color to said third color when absorbing radiation emitted by said second upconversion material.

Preferably, said first, second third, possibly more colors are different colors. Preferably, the different colors enable a multi- or full-color display, preferably by additive and/or substrative color mixing.

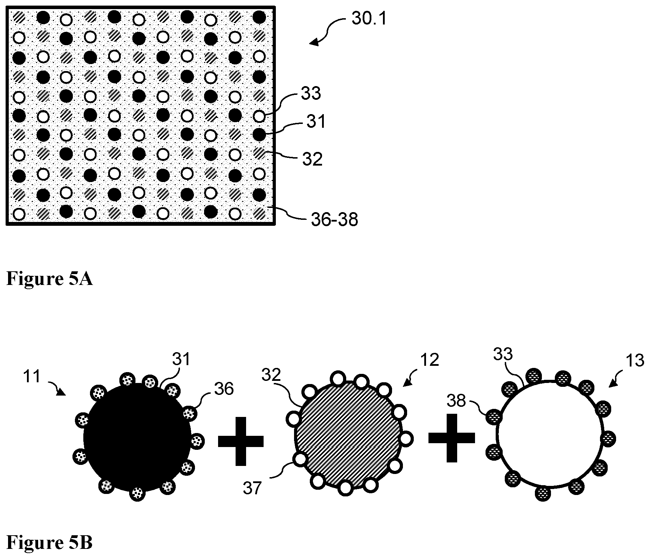

**Figures 5A** and **5B** illustrate exemplary sea-island and core-shell configurations, respectively, of embodiments based on three or possibly more upconversion materials and associated chromic materials. In Fig. 5A, different particles of the different upconversion materials 31-33 are distributed arbitrarily and/or evenly in the host material of the display medium 30.1. Different chromic materials 36-38 are also distributed in the host material. In order to locally create a desired color, only the upconversion materials suitable to activate the chromic materials suitable to exhibit the desired color are excited. This is preferably done by adjusting the wavelength and/or other parameters of the addressing light beams 26, 27 as required to selectively excite the corresponding upconversion material. Overall color at an area may be done by additive color mixing, for example.

In Figure 5B, different coated particles 11, 12, 13 suitable to generate three different colors are shown. Particle 11 comprises an upconversion material 31 and a chromic material 36, particle 12 comprises an upconversion material 32 and a chromic material 37, and particle 13 comprises an upconversion material 33 and a chromic material 38. Upconversion materials 31-33 are different upconversion materials and chromic materials 36-38 are different chromic materials, displaying different colors when activated. Furthermore, each upconversion material is suitable to activate the respective chromic material with which it is associated, for example the chromic material coated on the particle comprising the appropriate upconversion material.

In an embodiment, said display medium comprises a fourth upconversion material and a fourth chromic material, wherein said fourth chromic material passes from transparent to a fourth color or changes color to said forth color when absorbing radiation emitted by said second upconversion material. The embodiment using four different chromic and upconversion materials is a logical extension of the previous embodiments and is not specifically illustrated in the figures.

It is also noted that the color change of the chromic material is preferably reversible. The reversion of the color change, also known as "bleaching", by which the chromic material turns back to the original, basic and preferably non-coloured state, may be induced independently by one or several processes. Such processes include applying a voltage between electrodes, by illumination, or via an electrolyte, for example. For example, electrode layers, may be provided with the display medium being sandwiched in between. At least one of the opposed electrodes, at the viewing side, needs to be transparent, so as to enable viewing the image through the electrode. In other embodiments, bleaching of the chromic material is achieved by illumination with the appropriate light that is suitable to reverse the light-induced color change. For example, the light arrangements 21, 22 may be equipped with light sources that allow for bleaching of the chromic material.

The displays may comprise additional layers, for example adjacent to and/or laminated onto the display medium. Additional layers may be selected from one or more of filter layers, reflective layers, light scattering layers, and background color layers, for example. For example, in case of a 2D display, the display arrangement may comprise a back substrate or cover and/or a white layer, such that there is only one viewing surface. In embodiments where the display enables viewing from both, opposed main sides of the display (two viewing surfaces), such a white layer and/or back cover is preferably absent, and the entire display medium is preferably transparent at least to visible light in the absence of activation of the chromic material.

It is also noted that different colors may be provided in different layers of display mediums, which are superposed, thereby also enabling the possibility of subtractive color mixing. In this case, the combination of a chromic material and an upconversion material that are provided for generating a particular color are localized in one of several layers. This may facilitate the addressing of these particular combinations by the driving light and reduce the risk of unintentional generation of a color at a position that has not specifically been addressed.

The displays of the present invention are preferably passive, reflective displays. In particular, the chromic materials assume a color, and thereby reflect the external visible light of the corresponding color. While the upconversion materials emit light, such light, in as far as it is visible light, is preferably absorbed by the surrounding chromic material. The sea-island and/or core-shell configurations are example of how it can be assured that there is sufficient chromic material in vicinity of any upconversion entity so as to warrant the absorption of light emitted by the upconversion material.

The displays of the invention are preferably light driven displays, the information shown on the display being generated by the driving light, such as intersecting light beams 26, 27 generated by the light arrangements 21, 22.

In the present invention, the combination of upconversion materials with chromic materials provides a number of advantages: 1) the chromic material generally requires high energy photons to be activated, such as, for instance, blue light or ultra-violet (UV) light, which is harmful to humans. With the upconversion material, the as mentioned chromic materials can be activated with lower energy photons that are not harmful; 2) the lower energy photon that is used to drive the display's energy is in the lower visible to IR region. The excitation light in in these regions is largely or totally invisible to humans, creating less light pollution during use the display; 3) the lower energy photon has better penetrability; thus, it is also possible to enable volume display to locate a coordination with three dimensions; 4), the fact that upconversion needs multiple photons to meet each other enables the possibility for addressing a specific coordinate using two driving light beams that meet each other.

While certain of the preferred embodiments of the present invention have been described and specifically exemplified above, it is not intended that the invention be limited to such embodiments. Various modifications may be made thereto without departing from the scope and spirit of the present invention, as set forth in the following claims.

## Claims

1. A display arrangement (10, 100) comprising:
(a) two or more light assemblies (21, 22) capable of generating near infrared (NIR) light, and,
(b) a display medium (30, 90), the display medium comprising:
- one or more upconversion material (31) that is suitable to convert absorbed NIR radiation (26, 27) to emitted lower wavelength light, and,
- one or more photochromic and/or photoelectrochromic material (36), capable of being colored and/or changing color upon absorption of light.

2. The display arrangement of claim 1, wherein said one or more photochromic and/or photoelectrochromic material (36) is provided to change color upon absorption of light emitted by said one or more upconversion material (31).

3. The display arrangement of any one of claims 1 or 2, comprising a plurality of different upconversion materials, capable of converting a plurality of NIR radiation having different wavelength and/or to emit a plurality of lower wavelength and/or higher energy light having different wavelengths.

4. The display arrangement of any one of claims 1-3, wherein said upconversion material (31) is a first upconversion material (31) and said one or more photochromic and/or photoelectrochromic material is a first photochromic and/or photoelectrochromic material (36), wherein said first photochromic and/or photoelectrochromic material passes from transparent to a first color or changes color to said first color when absorbing radiation emitted by said first upconversion material.

5. The display arrangement of claim 4, wherein said display medium comprises a second upconversion material (32) and a second photochromic and/or photoelectrochromic material, wherein said second photochromic and/or photoelectrochromic material passes from transparent to a second color or changes color to said second color when absorbing radiation emitted by said second upconversion material.

6. The display arrangement of any one of the preceding claims, comprising first and second light assemblies (21, 22), wherein said first and second light assemblies are provided at first and second positions in said arrangement and are configured to emit first and second NIR light beams (26, 27) from said first and second positions into the said display medium (30) such that said first and second NIR light beams intersect at an intersection (40) in said display medium.

7. The display arrangement of claim 6, wherein, at said intersection (40) of said first and second NIR light beams (26, 27), said one or more upconversion material is suitable to convert said NIR light into said lower wavelength and/or higher energy light.

8. The display arrangement of any one of the preceding claims, wherein said two or more light assemblies (21, 22) are configured to, independently one from the other, emit NIR light beams into said display medium.

9. The display arrangement of any one of the preceding claims, wherein said one or more upconversion material is provided in the form of particles, preferably nanoparticles.

10. The display arrangement of any one of the preceding claims, wherein said one or more upconversion material comprises one or more selected from the group consisting of Pr³⁺ (4f2), N^{d3}+ (4f3), Sm³⁺ (4f5), Eu³⁺ (4f6), Gd³⁺ (4f7), Tb³⁺ (4f8), Dy³⁺ (4f9), Ho³⁺ (4f10), Er³⁺ (4f11), Tm³⁺ (4f12), Tm²⁺ (4f13), actinides ions, preferably from U⁴⁺ (5f2) and U³⁺ (5f5), and transition metal ions, preferably from Ti²⁺ (3d2), Cr³⁺ (3d3), Mn²⁺ (3d5), Ni²⁺ (3d8), Cu²⁺ (3d9), Mo³⁺ (4d3), Re⁴⁺ (5d3), and Os⁴⁺ (5d4).

11. The display arrangement of any one of the preceding claims, wherein said one or more photochromic and/or photoelectrochromic material (36) are selected from organic materials, and inorganic materials, preferably from organic compounds.

12. The display arrangement of any one of the preceding claims, wherein said display medium (30) comprises a host material that is transparent to NIR light and preferably to visible light, wherein said upconversion material and said photochromic and/or photoelectrochromic material are provided in said host material.

13. The display arrangement (100) of any one of the preceding claims, which comprises a three-dimensional (3D) display medium (90), for example a cubic display medium.

14. A display medium (30) comprising:
- one or more upconversion material (31) that is suitable to convert absorbed near infrared (NIR) radiation (26, 27) to emitted lower wavelength, and,
- one or more photochromic and/or photoelectrochromic material (36), capable of being colored and/or changing color upon absorption of light.

15. The display medium of claim 14, wherein:
- said upconversion material (31) is a first upconversion material and said one or more photochromic and/or photoelectrochromic material is a first photochromic or photoelectrochromic material (36), wherein said first photochromic and/or photoelectrochromic material passes from transparent to a first color or changes color to said first color when absorbing a photon emitted by said first upconversion material,
wherein:
- said display medium comprises a second upconversion material (32) and a second photochromic or photoelectrochromic material, wherein said second photochromic and/or photoelectrochromic material passes from transparent to a second color or changes color to said second color when absorbing a photon emitted by said second upconversion material, and wherein: said first and second colors are different colors.

16. The display medium of claim 14 or 15, in which said one or more upconversion material (31) is provided in the form of particles, preferably nanoparticles.
